(19) Europäisches Patentamt
European Patent Office
Office européen des brevets

(11) **EP 0 919 893 A2**

(12) **EUROPEAN PATENT APPLICATION**

(43) Date of publication:
02.06.1999 Bulletin 1999/22

(51) Int Cl.⁶: **G05B 19/18**, G05B 19/41

(21) Application number: 98309800.5

(22) Date of filing: 30.11.1998

(84) Designated Contracting States:
**AT BE CH CY DE DK ES FI FR GB GR IE IT LI LU MC NL PT SE**
Designated Extension States:
**AL LT LV MK RO SI**

(30) Priority: 01.12.1997 JP 347253/97

(71) Applicant: **Active Ltd.**
**Tarumi-ku, Kobe (JP)**

(72) Inventor: **Yamanishi, Asao, c/o Active Ltd.**
**Akashi-shi, Hyogo-ken (JP)**

(74) Representative: **Crawford, Andrew Birkby et al**
**A.A. THORNTON & CO.**
**Northumberland House**
**303-306 High Holborn**
**London WC1V 7LE (GB)**

(54) **Processing machine with numerical control apparatus**

(57)     A milling cutter is moved relative to a workpiece rotating about a given axis to thereby cut the workpiece into a last. A milling cutter moving apparatus moves the milling cutter in accordance with movement data stored in a memory. The movement data is such that when the milling cutter is moved relative to the rotating workpiece in accordance with the movement data, the cutting edge of the milling cutter, at each of the rotational positions of the workpiece, is at a location where it would contact the surface of the last if the last were rotated about the given axis.

F I G . I

## Description

The present invention relates to a processing machine with a numerical control apparatus for processing a workpiece into a predetermined solid or three-dimensional shape, e.g. a last for a shoe having a predetermined shape. Also, this invention relates to a computing apparatus for preparing cutter blade movement data in accordance with which a cutter blade of the processing machine is moved.

## BACKGROUND OF THE INVENTION

Conventionally, models, such as lasts and wooden and plastic models of commercial goods have been made by hand by skilled artisans. However, it usually needs a long time and work to make such models by hand even by skilled artisans. In addition, recently, such skilled artisans who can make lasts have become fewer, so that it is difficult to obtain good lasts.

It has been proposed to use a computer or numerical control apparatus to control movement of a tool or cutting blade of machine tools, such as a lathe and a milling machine, so that lasts can be easily made in a short time. For cutting a workpiece into a last having a desired shape with a lathe with a numerical control apparatus, it is necessary to compute cutter blade movement data in accordance with which the cutter blade of the lathe is to be moved relative to the workpiece. Computation of such movement data is undesirably complicated. In addition, cutter blade movement data computed in a conventional manner cannot process a workpiece exactly into a desired shape.

An object of the present invention is to provide a computation system capable of preparing cutter blade movement data which can be used to make models, such as a last, in a relatively short time. Another object of the present invention is to provide a processing machine with a numerical control apparatus for processing a workpiece in accordance with cutter blade movement data prepared by the computation system.

## SUMMARY OF THE INVENTION

A processing machine with a numerical control apparatus according to the present invention comprises a rotary cutter blade adapted to rotate about an axis. The processing machine includes memory means for storing therein cutter blade movement data in accordance with which the cutter blade is to be moved relative to a workpiece rotating about a predetermined axis to thereby process the workpiece into a three-dimensional object having a predetermined three-dimensional shape. The processing machine further comprises moving means for causing relative movement of the cutter blade in accordance with the cutter blade movement data.

The predetermined three-dimensional shape comprises a number of cross-sections in planes perpendicular to the predetermined axis. At least one of the cross-sections is non-circular, has a different shape or size from at least one of the remaining cross-sections or is rotated about the predetermined axis relative to at least one of the remaining cross-sections.

The cutter blade movement data referred to herein is data which provides such relative movement of the rotary cutter blade that if the finally resulting object having the predetermined three-dimensional shape (hereinafter sometimes referred to as predetermined three-dimensional object) were rotated about the predetermined axis, the surface of the body of revolution of the rotary cutter blade would contact the surface of the object at respective rotational positions of the three-dimensional object.

The cutter blade movement data may be prepared in the following manner. Let it be assumed that the three-dimensional object is rotated by an increment of a given angle about the said predetermined axis. The cutter blade movement data is prepared from data representing respective points on the contour lines of respective ones of the cross-sections of the three-dimensional object at its respective rotational positions, and data representing respective points on the locus drawn by the cutting edge of the rotating cutter blade.

The cutter blade movement data may be prepared in the following manner. Let it be assumed that the three-dimensional object is placed in a three dimensional coordinate system with its Z-axis being in alignment with the predetermined axis about which the three-dimensional object is rotated. The movement data is prepared from data obtained by rotating about the Z-axis data of the X, Y and Z coordinates of respective ones of various points on the contour line of each cross-section of the three-dimensional object by a predetermined incremental angle, and from data of the X, Y and Z coordinates of respective ones of points on the locus of the rotation of the rotary cutter blade.

The cutter blade movement data may be data in accordance with which, at each of the rotational positions of the three-dimensional object rotated by the predetermined incremental angle, the cutting edge of the cutter blade is positioned at a location corresponding to the maximum one of the X coordinates of points on a part of the contour line of each cross-section spanning over a predetermined angular range including the X-Z plane.

The cutter blade may have a center axis extending at a predetermined angle with respect to the Z-axis, and have a cutting edge in the shape of a semi-circle having a diameter extending in parallel with the center axis.

The cutter blade movement data may be data in accordance with which, at each of the rotational positions of the object, spaced from each other by the predetermined incremental angle, the cutting edge of the cutter blade is positioned at a location where it contacts the maximum one of the X coordinates of points on contour lines of a plurality of cross-sections within a predetermined range along the Z-axis. The points are the ones on parts of the contour lines spanning over a predetermined angular range of the contour lines.

The computation system according to the present invention computes cutter blade movement data for moving a rotary cutter blade of a processing machine with a numerical control apparatus. The rotary cutter blade rotates about an axis. The processing machine further includes memory means for storing therein the cutter blade movement data as computed by the computation system, in accordance with which the cutter blade is to be moved relative to a workpiece rotating about a predetermined axis to thereby process the workpiece into a three-dimensional object having a predetermined three-dimensional shape. The processing machine further comprises moving means for causing relative movement of the cutter blade in accordance with the cutter blade movement data.

The three-dimensional object may be a body having a plurality of cross-sections perpendicular to the predetermined axis. At least one of the cross-sections is non-circular, has a different shape or size from at least one of the remaining cross-sections or rotated about the predetermined axis relative to at least one of the remaining cross-sections. The cutter blade movement data referred to herein is data to provide such relative movement of the rotary cutter blade that if the ultimately resulting object having the predetermined three-dimensional shape were rotated about the predetermined axis, the surface of the body o revolution of the rotary cutter blade would contact the surface of the three-dimensional object at its respective rotational positions.

The computation system may be used to prepare cutter blade movement data in accordance with which a cutting edge of a rotary cutter blade is to be moved to cut the workpiece into a last for a shoe, and may include computation means for computing data of coordinates of each of respective points on the locus of the cutting edge of the cutter blade in accordance with the following equations. Before it, let it be assumed that the workpiece is placed in a three-dimensional coordinate system with its Z-axis being in alignment with the predetermined axis about which the workpiece is rotated, and that the cutter blade has a semi-circular cutting edge.

$$X = (r - R - r \bullet \sin t) \cos \theta \bullet \cos \delta - r \bullet \cos t \bullet \sin \theta + P_{ox}$$

$$Y = (r - R - r \bullet \sin t) \sin \delta$$

$$Z = - (r - R - r \bullet \sin t) \cos \delta \bullet \sin \theta - r \bullet \cos t \bullet \cos \theta - r + P_{oz}$$

In the equations, R is the radius of the body of revolution of the cutting blade, r is the radius of the semi-circle of the cutting edge, t is a parameter representing an angle between the radius of the semi-circle passing through a point and a reference plane to specify the position of the point on the cutting edge, $\delta$ is a parameter representing an angle between the radius of the body of revolution of the cutting blade passing through the point on the cutting edge and a reference plane, $\theta$ is a predetermined angle between the Z-axis and the axis of rotation of the cutting blade, $P_{0x}$ is the X coordinate of the center of the rotating cutting blade, and $P_{0z}$ is the Z coordinate of the center of the rotating cutting blade.

The computation means may use data of coordinates of respective points on the locus of the cutter blade and data of coordinates of respective points on the contour lines of cross-sections of the predetermined three-dimensional object. At each of the rotational positions of the object successively rotated by an increment of a predetermined angle, that one of the points on parts, extending over an angular range predetermined with respect to the X-Z plane, of the respective contour lines of cross-sections within a predetermined range along the Z-axis which has the largest X coordinate is determined, and the computation means corrects the X coordinate of the point on the cutter blade to coincide with the determined largest X coordinate.

BRIEF DESCRIPTION OF THE DRAWINGS

FIGURE 1 is a perspective view of a processing machine with numerical control apparatus according to one embodiment of the present invention;
FIGURE 2 is an electrical circuit diagram of the processing machine shown in FIGURE 1;
FIGURE 3(a) and FIGURE 3(b) are front and side elevational views, respectively, of a milling cutter useable in the processing machine shown in FIGURE 1 ;

FIGURE 4(a) and FIGURE 4(b) are enlarged plan and front elevational views, respectively, of the milling cutter useful in explaining the coordinates of the cutting edge;

FIGURE 5 is an enlarged plan view of the milling cutter for use in explaining the coordinates of the cutting edge; and

FIGURE 6 is a perspective view of the three-dimensional shape of a last which is to be made by the processing machine from a workpiece.

## DETAILED DESCRIPTION OF PREFERRED EMBODIMENT

A processing machine with a numerical control apparatus according to one embodiment of the present invention is an apparatus for making, for example, a last for a shoe having a desired shape from a workpiece of wood, plastics or the like by cutting the workpiece with a milling cutter moved in accordance with milling cutter movement data stored in a memory unit. The milling cutter movement data is computed by a computer, e.g. a personal computer, which is independent of the processing machine, and is stored in a record medium, e.g. a floppy disc. The movement data stored in the floppy disc is supplied to the processing machine so that it moves the milling cutter in accordance with the supplied data. The milling cutter cuts the workpiece into a last having a shape as defined by the movement data.

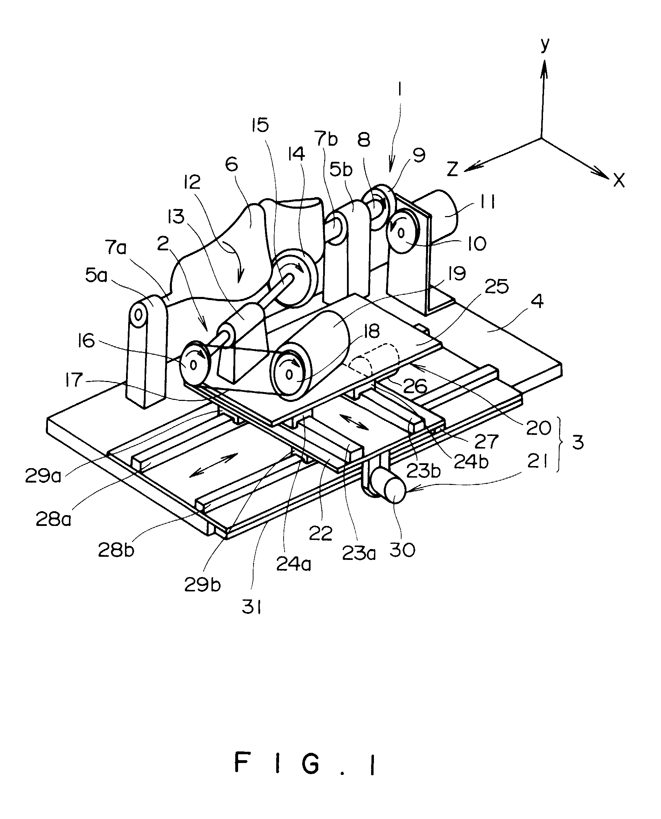

Referring to FIGURE 1, the processing machine with numerical control apparatus according to one embodiment of the present invention includes a workpiece rotating arrangement 1, a milling cutter rotating arrangement 2, and a milling cutter moving arrangement 3.

The workpiece rotating arrangement 1 includes a base 4, on which bearings 5a and 5b are mounted substantially in line with each other, with a spacing disposed between them. The bearings 5a and 5b rotatably support shaft-like portions 7a and 7b, respectively, which extend from opposed ends of the workpiece 6. Thus, the workpiece 6 is rotatably supported.

A coordinate system may be provided with the Z-axis, which is the axis about which the workpiece 6 rotates, the X-axis which is orthogonal to the Z-axis and extends horizontally, and the Y-axis which is orthogonal to both the Z-axis and X-axis.

The distal end of the shaft-like portion 7b of the workpiece 6 is connected to a rotary shaft 8, which is connected through cog wheels 9 and 10 to the rotary shaft of a workpiece driving motor (servo motor) 11. Thus, when the workpiece driving motor 11 is operated, the workpiece 6 rotates in a predetermined direction indicated by an arrow 12.

As shown in FIGURE 1, the milling cutter rotating arrangement 2 includes a bearing 13, which supports rotatably a rotary shaft 15 of the cutter blade or milling cutter 14. A pulley 16 is mounted on the end portion of the rotary shaft 15 opposite to the milling cutter 14. The pulley 16 is connected via a power transmission belt 17 and a pulley 18 to the rotary shaft of a milling cutter driving motor 19. The motor 19 may be a fixed rotation rate motor with a speed changing system. Thus, by operating the milling cutter driving motor 19, the milling cutter 14 can be rotated at a fixed rate.

The center axis of the rotary shaft 15 of the milling cutter 14 lies in the same plane as the center line of the shaft-like portions 7a and 7b of the workpiece 6, and an angle of $\theta$ is formed between them.

The milling cutter moving arrangement or moving means 3 includes an X-direction driving device 20 which can move the milling cutter rotating arrangement 2 along the X-axis, and a Z-direction driving device 21 which can move the milling cutter rotating arrangement 2 along the Z-axis.

The X-direction driving device 20 includes two guide rails 23a and 23b extending in parallel along the X-axis. The two guide rails 23a and 23b are mounted on the top surface of a base 22 movable along the Z-axis as will be described later. Carriers 24a and 24b are mounted on the guide rails 23a and 23b, respectively, in such a manner that they can move along the rails 23a and 23b. A base 25 movable along the X-axis is supported on the carriers 24a and 24b. The milling cutter rotating arrangement 2 is mounted on the top surface of the base 25.

An X-direction driving motor (servomotor) 26 is mounted at a location along one edge of the base 25 on the bottom surface of the base 25. A pinion (not shown) is secured to the rotary shaft of the X-direction driving motor 26, and a straight rack 27 which can engage with the pinion is secured along one edge of the bottom surface of the base 22 which is movable along the Z-axis. When the X-direction driving motor 26 is operated, the base 25 and the milling cutter rotating arrangement 2 mounted on the top surface of the base 25 move along the X-axis.

The Z-axis driving device 21 includes two guide rails 28a and 28b extending in parallel along the Z-axis with a spacing between them. The guide rails 28a and 28b are fixed on the top surface of the fixed base 4. Carriers 29a and 29b are mounted on the guide rails 28a and 28b, respectively in such a manner as to be movable on the respective rails 28a and 28b. The base 22, which is movable along the Z-axis, is mounted on the carriers 29a and 29b.

A Z-direction driving motor (servomotor) 30 is mounted at a location along one edge of the bottom surface of the base 22. A pinion (not shown) is secured to the rotary shaft of the motor 30, which engages with a straight rack 31 mounted along one edge of the bottom surface of the fixed base 4. Thus, when the Z-direction driving motor 30 is operated, the base 22 and the X-direction driving device 20 and the milling cutter rotating arrangement 2 mounted on the base 22 move along the Z-axis.

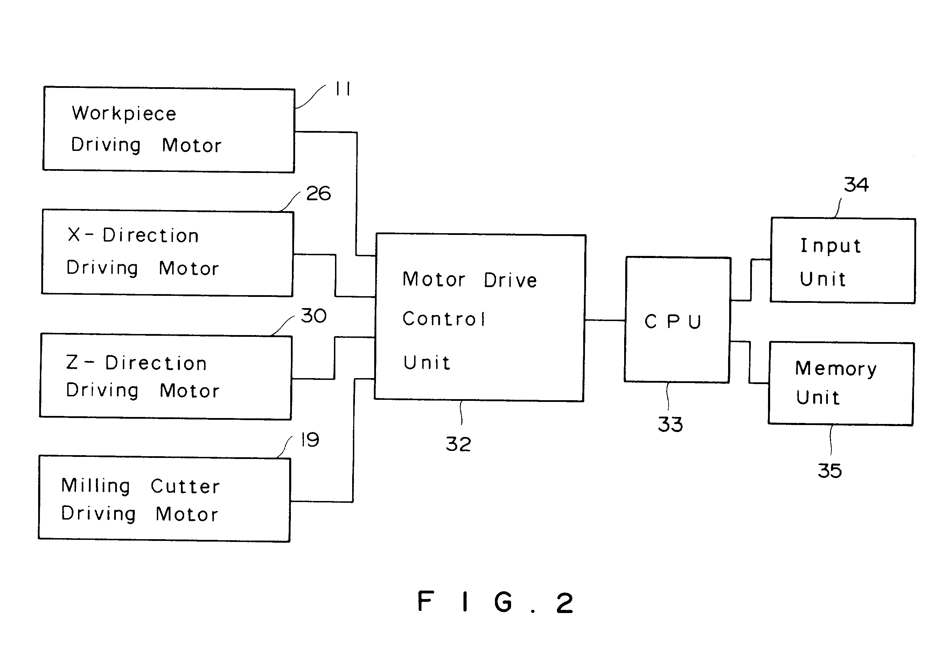

As shown in FIGURE 2, the workpiece driving motor 11, the X-direction driving motor 26, the Z-direction driving motor 30 and the milling cutter driving motor 19 are coupled through a motor drive control unit 32 to an operation control unit (CPU) 33. An input unit 34 and a memory unit 35 are connected to the operation control unit 33.

The input unit 34 includes an operating switch through which the processing machine can be turned on and off.

The memory unit 35 includes a ROM in which stored is a program for operating and stopping the workpiece driving motor 11, the X-direction driving motor 26, the Z-direction driving motor 30 and the milling cutter driving motor 19, in a given sequence. The memory unit 35 includes also a floppy disc driver for driving a floppy disc with milling cutter movement data stored therein, in accordance with which the workpiece 6 is cut with the milling cutter 14 into a last of desired shape. The movement data includes data relating to the timing of the operation of the workpiece driving motor 11, the X-direction driving motor 26 and the Z-direction driving motor 30, and data relating to angles by which the rotary shafts of the respective motors are to be rotated. The movement data has been computed by a later-mentioned computer and recorded on the floppy disc.

Now, the milling cutter movement data in accordance with which the milling cutter 14 is moved is described in detail.

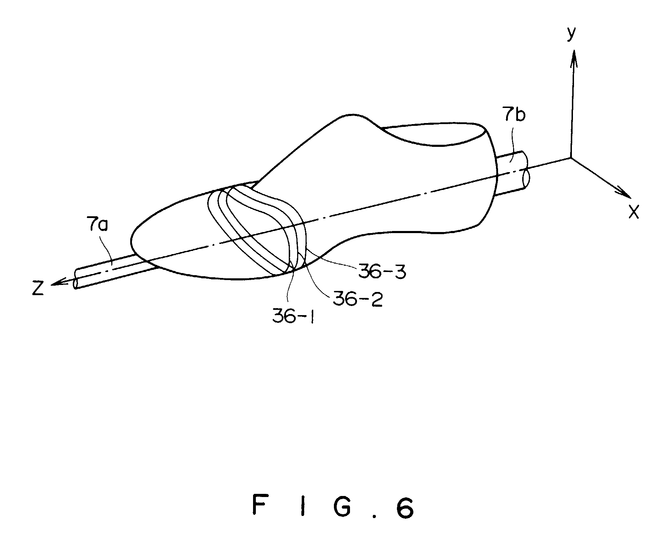

As shown in FIGURE 1, the processing machine with numerical control apparatus rotates the workpiece 6 in the predetermined direction 12 about the Z-axis, while moving the milling cutter 14 along the X-axis and/or Z-axis, so that the workpiece 6 is cut into, for example, a last having a desired shape determined by the movement data. The three-dimensional shape of the completed last is shown in FIGURE 6, in which distances from the Z-axis to points at the same X-coordinate or Y-coordinate on contour lines 36-1, 36-2, 36-3, ... depicting cross-sections of the last perpendicular to the Z-axis may include different ones. In other words, the cross-sections of the three-dimensional shape of the last include non-circular cross-sections. The movement data is data in accordance with which the rotating cutter 14 is moved along the X-axis and the Z-axis in such a manner that if the last having a predetermined three-dimensional shape to be prepared from the workpiece 6 were rotated about the Z-axis, the surface of the body of revolution of the rotating cutter 14 would contact the surface of the last at respective rotational positions of the last.

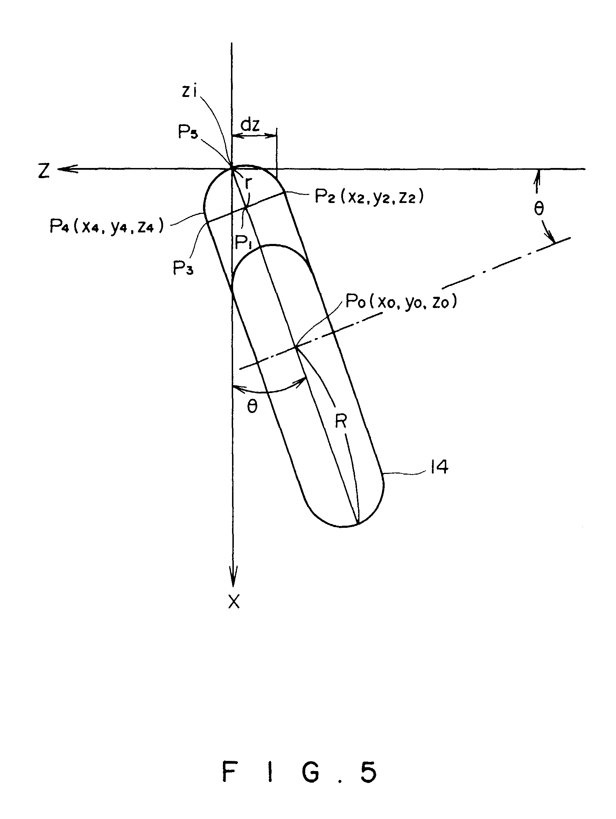

The movement data comprises data of a reference point, e.g. the tip end $P_5$, for the rotating milling cutter 14, e.g. data of the X coordinate $x_j$ of the tip end $P_5$ of the milling cutter 14, at the Z coordinate $Z_i$ of the reference point $P_5$ shown in FIGURE 5 when the workpiece 6 is rotated from its reference position by an angle of $\psi$.

The Z coordinate $z_i$ of the reference point $P_5$ changes by, for example, 0.5 mm over the range of from a location on the toe side shaft-like portion 7a to a location on the heel end side shaft-like portion 7b of the last.

The angle $\psi$ is incremented by, for example, 1°, and preferably an angle of from 0.1° to 1°, over a range of from 0° (the reference position) to 360°.

Accordingly, assuming that the length of the last between the toe to the heel end is 260 mm, the number of samples $(z_i, \psi, x_j)$ constituting the movement data is $260 \div 0.5 \times 360 = 187{,}200$, because the number of Z coordinates is $260 \div 0.5 = 520$, and the workpiece is rotated in 360 increments of 1° over an angular range of 360°.

Since the milling cutter 14 has a thickness, additional movement data is required, in accordance with which the cutter 14 is to be additionally moved along the Z-axis over a distance corresponding to the thickness of the cutter 14. Such additional movement data is not taken into account in the above calculation, but it is stored in the floppy disc.

Next, the operation of the processing machine with numerical control apparatus with the above-described arrangement is described.

First, an operator mounts a workpiece 6 to be worked on the bearings 5a and 5b, and turns on the operating switch in the input unit 34 (FIGURE 2). The CPU 33 drives the milling cutter driving motor 19 to rotate the cutter 14 in the predetermined direction at a predetermined speed. At the same time, the CPU 33 causes the milling cutter 14 to move to a position where the reference point $P_5$ on the milling cutter 14 is positioned near the heel-side shaft-like portion 7b. The movement of the milling cutter 14 is carried out by operating the X-direction and Z-direction driving motors 26 and 30 in accordance with the movement data stored in the memory unit 35. Thereafter, the CPU 33 operates the workpiece driving motor 11, the X-direction driving motor 26 and the Z-direction driving motor 30 in accordance with the movement data to cut the workpiece 6 into the last shown in FIGURE 6. Thus, the rotating milling cutter 14 can move to a position where the reference point $P_5$ on the cutter 14 shown in FIGURE 5 assumes an X coordinate $x_j$ when the reference point $P_5$ is at the Z coordinate $z_i$ and the workpiece 6 is at a rotational position spaced from its reference position by an angle $\psi$. Thus, if the milling cutter 14 were moved along both the X-axis and the Z-axis in accordance with the movement data, and, at the same time, the completed last were rotated about the Z-axis, the surface of the body of revolution of the rotating milling cutter 14 would contact the surface of the last at each rotational position of the last. In other words, the workpiece 6 can be processed into a last having an exactly desired shape.

Next, how to prepare the milling cutter movement data by a computer, e.g. personal computer, is described.

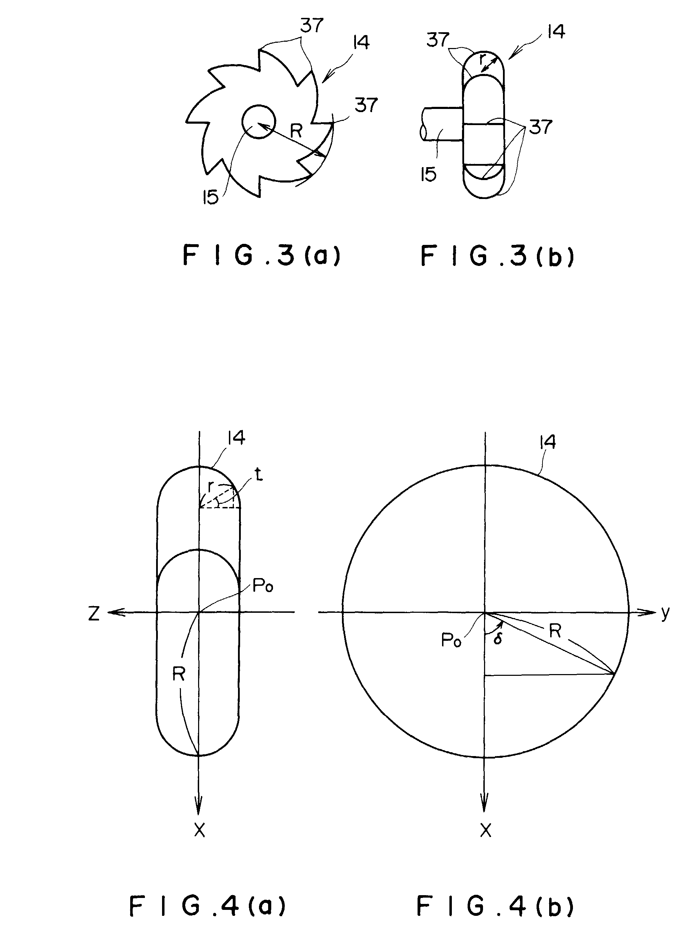

    1. Equations for expressing the surface contour of the body of revolution of the milling cutter 14 are determined.
       As shown in FIGURE 3(a), the milling cutter 14 has a plurality, e.g. eight, of cutting edges 37 angularly spaced from each other by a given angle. The distance of each cutting edge 37 from the center of the cutter 14, i.e. the radius R of the rotating cutter is, for example, 45 mm. Further, as shown in FIGURE 3(b), the cutting edge 37 of the body of revolution of the cutter 14 has a semicircular shape having a radius r of, for example, 10 mm.

(1) Equations expressing a particular point on one of the cutter edges 37 lying in the X-Z plane viewed from above (see FIGURE 4(a)) are as follows.

Assuming that the axis of rotation 15 of the milling cutter 14 with the center of rotation being at $P_0$ is in parallel with the Z-axis, the coordinates $x_1$, $y_1$, $z_1$ of the particular point with respect to the origin at $P_0$ can be expressed as follows.

$$x_1 = r - R - r \bullet \sin t$$

$$y_1 = 0$$

$$z_1 = - r \bullet \cos t$$

In the equations, t represents the angle between the Z-axis and the radius passing the center of the semicircle of the cutting edge 37 and the particular point of which the coordinates are being determined, as shown in FIGURE 4(a). The value of t is $0 \leq t \leq \pi$. In FIGURE 4(a), values on the X-axis below the origin $P_0$ are positive, and values on the Z-axis leftward of the origin $P_0$ are positive.

(2) Equations expressing the coordinates $x_2$, $y_2$ and $z_2$ of the same particular point on the cutting edge 37 which is now at an angle of $\delta$ with respect to a reference rotational position or plane, e.g. the X-Z plane (see FIGURE 4(b)) are as follows.

$$x_2 = x_1 \bullet \cos \delta$$

$$y_2 = x_1 \bullet \sin \delta$$

$$z_2 = z_1$$

(3) Equations expressing the coordinates $x_3$, $y_3$ and $z_3$ of the same particular point of the same cutter edge 37 discussed in the above equations (2), with the axis of rotation 15 of the milling cutter 14 being at an angle of $\theta$ (e.g. 20°) with respect to the Z-axis (see FIGURE 5), are as follows.

$$x_3 = x_2 \bullet \cos \theta + z_2 \bullet \sin \theta$$

$$y_3 = y_2$$

$$z_3 = - x_2 \bullet \sin \theta + z_2 \bullet \cos \theta$$

(4) Equations expressing the coordinates x, y and z of the same point of the same cutter edge 37 discussed in the above equations (3), when the milling cutter 14 has been moved by $P_{0x}$ along the X-axis and by $P_{0z}$ along the Z-axis (see FIGURE 5), are as follows.

$$x = x_3 + P_{0x}$$

$$y = y_3$$

$$z = z_3 + P_{0z}$$

5) Substituting the equations as determined in the above sections (1), (2) and (3) into the equations of the section (4) results:

$$x = (r - R - r \bullet \sin t) \cos \delta \bullet \cos \theta - r \bullet \cos t \bullet \sin \theta + P_{ox}$$

$$y = (r - R - r \bullet \sin t) \sin \delta$$

$$z = - (r - R - r \bullet \sin t) \cos \delta \bullet \sin \theta - r \bullet \cos t \bullet \cos \theta + P_{oz}$$

The coordinates (x, y, z) as expressed by the equations discussed in the section (5) represent the position of a point on the surface of the body of revolution of the cutting edges 37 of the milling cutter 14 relative to the origin $P_5$, when the axis of rotation 15 of the milling cutter 14 is in parallel with the X-Z plane and at an angle of $\theta$ with respect to the Z-axis and the center $P_0$ is at a position $(x_0, y_0, z_0)$ as shown in FIGURE 5.

2. Data of coordinates (x, y, z) of a point on the portion of the surface of the body of revolution of the cutting edges 37 of the milling cutter 14 which actually contributes to the cutting is determined.

Assuming that the portion of the surface of the body of revolution of the cutting edges 37 which contributes to the cutting of the workpiece 6 is the portion within ranges defined by the following coordinates y and z which have been determined by the equations discussed in the above section 1-(5), the coordinates y and z within the ranges and the corresponding coordinates x, which will be referred to as milling cutter coordinate data, are determined and stored in the memory unit (not shown), which is disposed in a personal computer (not shown) computing the movement data.

$$Y_1 \leq y \leq Y_2$$

$$Z_1 \leq z \leq Z_2$$

where $Y_1 = -R$, $Y_2 = R$, $Z_1 = z_0 - r$, and $Z_2 = z_4$. $z_0$ is the z component of the point $P_0$, and $z_4$ is the z component of a point $P_4$ at which a line parallel with the X-axis is tangent to the cutting edge 37.

3. Data of coordinates (x, y, z) of points on the surface of the last having a predetermined three-dimensional shape is determined. This data will be referred to as last coordinate data.

The last coordinate data comprises coordinates of points on the contour lines 36-1, 36-2, 36-3, ..., which respectively define a number of cross-sections perpendicular to the Z-axis of the last, as shown in FIGURE 6. A set of coordinates of a number of points on each of the contour lines 36-1 etc. is referred to as contour data. A set of such contour data forms the last coordinate data. The last coordinate data is stored in the memory unit of the personal computer.

4. The movement data (z, $\psi$, x) in accordance with which the milling cutter is to be moved is determined.

The movement data (z, $\psi$, x) is prepared by computing the position, on the Z-X plane, of the milling cutter 14 when the surface of the last rotating about the Z-axis, as represented by the last coordinate data (x, y, z) contacts the surface of the body of revolution of the cutter edges 37 as expressed in the section 1-(5). Such position of the milling cutter 14 is determined for each of the rotational positions of the last. The computation is performed by the following steps (1)-(8). The processing steps (1)-(8) are performed by the CPU of the personal computer. The program in accordance with which the CPU uses to compute the movement data is stored in the memory unit connected to the CPU.

The processing according to the steps (1)-(8) can eliminate error in processing which would otherwise be caused by the fact that the position where the cutting edges 37 cut the workpiece 6 varies due to the non-circular shape of the respective cross-sections of the last. The processing can also eliminate error in processing which would otherwise be caused by the arrangement in which the rotation axis 15 of the milling cutter 14 is placed at an angle of $\theta$ (= 20°) with respect to the Z-axis. The processing according to the steps (1) through (8) can also eliminate error in processing which would otherwise be caused by the shape and thickness of the cutting edges 37, which is semi-circular with the radius r of 10 mm.

The rotation axis 15 of the milling cutter 14 is placed at an angle of $\theta$ with respect to the Z-axis in order to provide a spacing between the side of the cutter 14 and the workpiece 6, which can prevent the contact between them.

(1) Contour data $F_i$ of each cross-section having a Z coordinate of $z_i$ between the heel and the toe of the last is processed by the following steps (2) through (8). Assuming, for example, that the last is 260 mm long, and the cross-sections are taken at intervals of 0.5 mm along the Z-direction (i.e. the adjacent contour lines 36 are spaced by 0.5 mm), there are 520 ($= 260 \div 0.5$) cross-sections of the last. Data $F_i$ of each of the 520 cross-sections is stored.

(2) The workpiece 6 is processed, while being rotated. The processing in accordance with the steps (3)-(8) are carried out at each of the rotational positions $\psi_j$ of the workpiece 6 from 0° to 360° (exclusive). The respective rotational positions $\psi_j$ are spaced by 1° from adjacent ones. The processing in accordance with the steps (3) through (8) is carried out at each of 360 rotational positions $\psi_j$ of data $F_i$ of each of 520 cross-sections.

(3) Let it be assumed that each cutting edge 37 extends over a range of from a point $P_2$ to a point $P_3$ shown in FIGURE 5 and that the workpiece 6 is cut by the portion of the cutting edge 37 extending between a point $P_2$ and a point $P_4$ The processing by the steps (4)-(8) is carried out successively at each of the Z coordinates spaced at intervals of e.g. 0.5 mm over a range of from $z_2$ (the Z coordinate of $P_2$) to $z_4$ (the Z coordinate of $P_4$) in the X-Z plane. The Z coordinate $z_k$ of each point within the range between the points $P_2$ and $P_4$ on the cutting edge 37 can be expressed, in terms of the last coordinate data, as $z_k = z_i + dz$, where dz is a value in a range of from ($z_i - z_2$) to ($z_4 - z_i$). (See FIGURE 5.) The value dz changes by an increment or decrement of 0.5 mm. Processing in accordance with the steps (4) through (8) is carried out for each of the points on the cutting edge 37 in the range of from the point $P_2$ to the point $P_4$ in order to determine relationship of the respective points on the cutting edge 37 within the range of from $P_2$ to $P_4$ to each contour data of the workpiece 6 since it is not known which portion of the cutting edge 37 within the range of from $P_2$ to $P_4$ is cutting the workpiece 6. By determining such relationship, the cutting edge 37 is prevented from cutting an excessive amount of the workpiece 6.

(4) Let it be assumed that contour data $F_k$ represents a cross-section of the last at the Z coordinate $z_k$ and that contour data $F_k'$ corresponds to the contour data $F_k$ rotated by an angle of $\psi_j$. That is, the contour data $F_k'$ represents the same cross-section at the Z coordinate $z_k$ rotated by an angle of $\psi_j$. Then, the point of tangency between the curve expressed by the contour data $F_k'$ and the arc of the cutter edge 37 in the X-Y plane at the Z coordinate $z_k$ is computed by the computation described in the steps (5) and (6).

(5) Let it be assumed that the X and Y coordinates contained in the contour data $F_k'$ of a point $P_m$ on the cutter side of the contour line of the cross-section of the last at the Z coordinate $z_k$ are $x_m$ and $y_m$, respectively. Then, a point on the milling cutter 14 having an X coordinate $x_A$ and a Y coordinate $y_m$ at a Z coordinate dz (which is referenced to the point $P_5$ shown in FIGURE 5) of the milling cutter 14 is selected out of the coordinate data of the milling cutter 14. This means that the X coordinate of the point on the contour line of the cross-section of the last at a location having the Z coordinate $z_k$ and the Y coordinate $y_m$, is $x_m$, and the X coordinate of the point on the cutting edge 37 of the milling cutter 14 having Z and Y coordinates $z_k$ and $y_m$, respectively, is $x_A$.

Accordingly, in order for the workpiece 6 not to be cut too much, the milling cutter 14 should be moved away from the reference position shown in FIGURE 5 in the positive direction away from the workpiece 6 along the X-axis by an amount of

$$e_m = x_m - x_A$$

It should be noted here that if $e_m$ has a negative value, the milling cutter 14 is to be moved toward the workpiece 6.

(6) The processing (5) is performed for the coordinate data of points on the contour line of the cross-section at the Z coordinate $z_k$ contained in the contour data $F_k'$. The points to be processed are those within a predetermined angular range on opposite sides of the Z-X plane, e.g. 90 points having positive X and Y coordinate values and 90 points having positive X coordinate values and negative Y coordinate values. Data of the coordinate values of these 180 points is part of the contour data $F_k'$ of points on the contour lines extending in an angular range of $\pm 90°$ on the positive side of the X axis about the Z axis. Then, the largest one of these 180 $e_m$'s is taken as, $e_{max}$.

(7) The steps (3) through (6) are repeated for the cross-sections of the workpiece 6 at the respective Z coordinates within the range of from the Z coordinate of the point $P_2$ to the Z coordinate of the point $P_4$ shown in FIGURE 5, and the maximum one of all the $e_{max}$'s at the respective Z coordinates within the range is put as $e_{maxm}$.

(8) When the reference point $P_5$ on the milling cutter 14 is at a Z coordinate $z_i$ as shown in FIGURE 5 and the last or workpiece 6 is at an angle of $\psi_j$, the milling cutter 14 is moved along the X-axis by an amount equal to $d_j = e_{maxm}$ from the position shown in FIGURE 5. Since the X coordinate of the reference point $P_5$ is zero (0), the point spaced by $d_j = e_{maxm}$ from the reference point $P_5$ has an X coordinate $x_j$, which is the X coordinate of the cutting edge 37 which contacts the workpiece 6 at the rotation angle of $\psi_j$, at the Z coordinate $z_i$.

Thus, the position of one point where the cutting edge 37 of the milling cutter 14 should contact the workpiece 6 at one rotational position and at one Z coordinate has been determined. The above-described data processing is repeated for all of the remaining points on the contour line each of the remaining cross-sections for all of the remaining rotational angles of the workpiece 6.

The above-described processing machine with a numerical control apparatus can be used to manufacture not only a last for shoes, but also other models and wooden, plastic or metallic specimens of articles.

The present invention has been described in terms of a milling cutter having its axis of rotation forming an angle of θ with the Z-axis, but it can be equally applied to a machine with its axis of rotation in parallel with the Z-axis (i.e. θ = 0).

Instead of the machine with a rotary milling cutter, the present invention can be used with a machine with a rotary grindstone for processing a workpiece 6.

Also, instead of a floppy disc, other record medium may be used to store the movement data.

Instead of servomotors, which have been described as being used as the workpiece driving motor 11, the X-direction driving motor 26 and the Z-direction driving motor 30, stepping motors may be used.

Also, instead of the milling cutter 14, the workpiece 6 may be moved, while the milling cutter 14 is kept stationary.

**Claims**

1. A processing machine with a numerical control apparatus, comprising:

    a rotary cutting blade having a cutting edge;
    memory means for storing movement data in accordance with which relative movement of said cutting blade and a workpiece rotated about a predetermined axis is provided to thereby cut the workpiece into a predetermined three-dimensional shape; and
    moving means for providing said relative movement of said cutting blade and said workpiece;

    characterized in that:

    said predetermined three-dimensional shape comprises a plurality of cross-section in planes perpendicular to said predetermined axis, at least one of said cross-sections is non-circular, has a different shape or size from at least one of the remaining cross-sections or rotated about said predetermined axis relative to at least one of the remaining cross-sections; and
    said movement data is such as to cause relative movement of said cutting blade and said workpiece in such a manner that if said predetermined three-dimensional shape were rotated about said predetermined axis, the locus drawn by said cutting edge of said rotary cutting blade when rotated would contact the surface of said three-dimensional shape at each of rotational positions thereof.

2. The processing machine according to Claim 1 characterized in that said movement data is computed from data representing points on a contour line defining an outer periphery of each of said cross-sections of said three-dimensional shape at each of rotational positions spaced at predetermined angular intervals which said three-dimensional shape would assume when it were rotated about said predetermined axis, and from data representing points on said locus of said cutting edge of said rotary blade.

3. The processing machine according to Claim 1 characterized in that said movement data contains X coordinates computed from data obtained by rotating, about a Z-axis of a three-dimensional system in which said predetermined axis is the Z-axis, data of X, Y and Z coordinates of respective ones of points on said contour lines of respective ones of said cross-sections of said three-dimensional shape at respective angular positions spaced by a predetermined angle from each other assumed by said three-dimensional shape when rotated about said predetermined axis, and from data of X, Y and Z coordinates of respective ones of points on said locus of said cutting edge of said rotating cutting blade.

4. The processing machine according to Claim 1 characterized in that said movement data is such that, at each of rotational positions of said three-dimensional shaped spaced at predetermined angular intervals, said cutting edge of said rotary cutting blade is placed at a location corresponding to one of points on a part of the contour line of each of said cross-sections, said part of the contour line extending over an angular range predetermined with respect to the horizontal plane passing through said predetermined axis, said one point being horizontally furthest from the vertical plane passing through said predetermined axis.

5. The processing machine according to Claim 1 characterized in that:

said rotary cutting blade has a center axis of rotation which is disposed at an angle relative to said predetermined axis, and said cutting edge has a semi-circular shape having a diameter extending in parallel with said center axis; and

said movement data is such that, at each of rotational positions of said three-dimensional shape spaced at predetermined angular intervals, said cutting edge of said rotary cutting blade is placed at a location corresponding to one of points on parts of the contour lines of said cross-sections within a predetermined range along said predetermined axis, said parts of the contour lines extending over an angular range predetermined with respect to the horizontal plane passing through said predetermined axis, said one point being horizontally furthest of all of said points from the vertical plane passing through said predetermined axis.

6. A computation apparatus for preparing movement data in accordance with which relative movement of a workpiece rotated about a predetermined axis and a rotary cutting blade, having a cutting edge, of a processing machine with a numerical control apparatus is produced, whereby said workpiece is cut into a predetermined three-dimensional shape, said processing machine further comprising:

memory means for storing said movement data; and

moving means for producing said relative movement of said cutting blade and said workpiece in accordance with said movement data;

characterized in that:

said predetermined three-dimensional shape comprises a plurality of cross-sections, each depicted by a contour line, in planes perpendicular to said predetermined axis, at least one of said cross-sections is non-circular, has a different shape or size from at least one of the remaining cross-sections or rotated about said predetermined axis relative to at least one of the remaining cross-sections; and

said movement data is such as to cause relative movement of said cutting blade and said workpiece in such a manner that if said predetermined three-dimensional shape were rotated about said predetermined axis, the locus drawn by said cutting edge of said rotary cutting blade when rotated contacts the surface of said three-dimensional shape at each of rotational positions thereof.

7. The computation apparatus according to Claim 6 characterized in that said workpiece is processed into a shoe last,

that said workpiece and said cutting blade are positioned in a three-dimensional coordinate system in which the axis of rotation of said workpiece is in alignment with the Z-axis, and said relative movement is along the X-axis,

that said cutting blade has an axis of rotation at a predetermined angle with respect to the Z-axis, and the shape of said cutting edge is semi-circle with the diameter thereof extending in parallel with said axis of rotation of said cutting blade, and

that said computation apparatus includes computation means for computing data representing the coordinates of each point on the surface of a body of revolution of said cutting blade in accordance with the following equations:

$$x = (r - R - r \cdot \sin t) \cos \delta \cdot \cos \theta - r \cdot \cos t \cdot \sin \theta + P_{ox}$$

$$y = (r - R - r \cdot \sin t) \sin \delta$$

$$z = - (r - R - r \cdot \sin t) \cos \delta \cdot \sin \theta - r \cdot \cos t \cdot \cos \theta + P_{oz}$$

where x, y and z are the X, Y and Z coordinates of each point, R is the radius of the body of revolution of said cutting blade, r is the radius of the semi-circle of the cutting edge, t is a parameter representing an angle between the radius of said semi-circle passing through said point and a reference plane, δ is a parameter representing an angle between the radius of said body of revolution of said cutting blade passing through said point and a reference plane, $\theta$ is said predetermined angle between the Z-axis and the axis of rotation of said cutting blade, $P_{0x}$ is the X coordinate of the center of the rotating cutting blade, and $P_{0z}$ is the Z coordinate of the rotating cutting blade.

8. The computation apparatus according to Claim 6 characterized in:

that said workpiece is processed into a shoe last,
that said relative movement is provided by moving said rotary cutting blade;
that said workpiece and said cutting blade are positioned in a three-dimensional coordinate system in which the axis of rotation of said workpiece is in alignment with the Z-axis, and said cutting blade is moved along the X-axis,
that said cutting blade has an axis of rotation at a predetermined angle with respect to the Z-axis, and the shape of said cutting edge is semi-circle with the diameter thereof extending in parallel with said axis of rotation of said cutting blade,
that said computation apparatus includes computation means for computing said movement data for said cutting blade from data representing the coordinates of each point on the surface of a body of revolution of said cutting blade in accordance with the following equations:

$$x = (r - R - r \bullet \sin t) \cos \delta \bullet \cos \theta - r \bullet \cos t \bullet \sin \theta + P_{ox}$$

$$y = (r - R - r \bullet \sin t) \sin \delta$$

$$z = - (r - R - r \bullet \sin t) \cos \delta \bullet \sin \theta - r \bullet \cos t \bullet \cos \theta + P_{oz}$$

where z is a Z coordinate of each point, x is an X coordinate of said point, y is a Y coordinate of said point along an axis, R is the radius of the body of revolution of said cutting blade, r is the radius of the semi-circle of the cutting edge, t is a parameter representing an angle between the radius of said semi-circle passing through said point and a reference plane, $\delta$ is a parameter representing an angle between the radius of said body of revolution of said cutting blade passing through said point and a reference plane, $\theta$ is said predetermined angle between the Z-axis and the axis of rotation of said cutting blade, $P_{0x}$ is the X coordinate of the center of the rotating cutting blade, and $P_{0z}$ is the Z coordinate of the rotating cutting blade, and
that at each of the rotational positions of said predetermined three-dimensional shape, the largest difference between the X coordinates of points on parts, extending over an angular range predetermined with respect to the Z-X plane of said coordinate system, of the contour lines depicting the cross-sections at Z coordinates within a predetermined range, and the X coordinates of the points on the surface of the body of revolution of said cutting edge at said Z coordinates are determined, and the X coordinates in said movement data of said cutting blade are corrected by said largest difference.

F I G . I

F I G . 2

F I G . 3 (a)  F I G . 3 (b)

F I G . 4 (a)  F I G . 4 (b)

F I G . 5

F I G . 6